# EUROPEAN PATENT APPLICATION

(11) **EP 2 835 761 A1**
(43) Date of publication of application: **11.02.2015**
(21) Application number: 13772748.3
(22) Date of filing: 26.02.2013
(51) Int. Cl.: G06K 7/14, G06K 7/10, G06K 9/18

(54) **FILM ON WHICH CODE IS RECORDED, READER USED FOR RECOGNIZING THE FILM ON WHICH CODE IS RECORDED, AND ELECTRONIC APPARATUS INCLUDING DISPLAY DEVICE HAVING FILM ON WHICH CODE IS RECORDED ATTACHED THERETO**

(30) Priority: 03.04.2012 KR 20120034292; 02.05.2012 KR 20120046139
(71) Applicant: Intellectual Discovery Co., Ltd., Seoul 135-745 (KR)
(72) Inventor: LEE, Sang-Gyu, Seoul 137-070 (KR); LEE, Suk-Joo, Yongin-si Gyeonggi-do 448-160 (KR); PARK, Bong-Ki, Yongin-si Gyeonggi-do 446-740 (KR); MOON, A-Ram, Anyang-si Gyeonggi-do 431-807 (KR)
(74) Representative: Ter Meer Steinmeister & Partner
(86) International application number: PCT/KR2013/001505
(87) International publication number: WO 2013/151234

(57) **Abstract**

A film with codes, a reader used for reading the film and an electronic device with a display device with the film are disclosed. The present invention includes a first light irradiating section configured to irradiate a light with a first wavelength onto a product with codes, a second light irradiating section configured to irradiate a light with a second wavelength onto the product with codes, a control section configured to control the first and second light irradiating sections such that only one of the first and second light irradiating sections irradiates light, and a light capturing section configured to receive the light with a second wavelength.

## Description

### [Technical Field]

Exemplary embodiments of the present invention relate to a film with codes, a reader used for reading the film and an electronic device with a display device with the film. More particularly, exemplary embodiments of the present invention relate to a film with codes pattern which is readable by a reader even when the codes are formed on a transparent material surface that may be attached to a display section of an electronic device, a reader used for reading the film and an electronic device with a display device with the film.

### [Background Art]

According to a conventional reader that reads codes formed on a surface of a reading target, light irradiated by a light irradiating section of the conventional reader and light captured by a light capturing section of the conventional reader have the same wavelength. Therefore, there is limitation for the light irradiated by the light irradiating section to be captured by the light capturing section except for a diffused reflection surface such as a paper. As a result, the light irradiating section and the light capturing section must be optically separated.

Further, according to the conventional reader, when light is irradiated onto a transparent film with codes by the light irradiating section, light spot is generated by a regular reflection, and other portion cannot be captured such as "mirror phenomenon".

Further, according to the mirror phenomenon, the light spot takes effect by the angle of the reading target, the light spot cannot be defined in the image captured by a sensor, so that it is much harder to readout codes.

That is, according to the conventional reader, there is no problem for a surface of an opaque material such as a paper, on which codes are printed, but the conventional reader cannot be used in case that codes are printed on a transparent surface attached a display section of an electronic device, which displaying an image.

### [Disclosure]

### [Technical Problem]

Exemplary embodiments of the present invention provide a film with codes, which can be read by a reader when the codes are formed on a transparent material that is attachable to a display section of an electronic device, a reader used for reading the film and an electronic device with a display device with the film.

### [Technical Solution]

A reader according to an exemplary embodiment of the present invention comprises a light irradiating section and light capturing section. The light irradiating section is configured to irradiate a light with a first wavelength onto a film with codes formed by a fluorescent material. The light capturing section configured to capture only a light with a second wavelength, which is generated by the fluorescent material, when the light with a first wavelength is irradiated onto the codes.

The film may be attached onto a surface of a display device included in an electronic device, and the film may be transparent.

The light with a first wavelength may be ultraviolet light or infrared light, and the light with a second wavelength may be visible light.

The second wavelength may be out of wavelength range used in the display device.

The light capturing section may include a filter allowing only a light with the second wavelength to pass therethrough.

A reader according to another exemplary embodiment of the present invention may comprises a first light irradiating section, a second light irradiating section, a control section and a light capturing section. The first light irradiating section is configured to irradiate a light with a first wavelength onto a product with codes. The second light irradiating section is configured to irradiate a light with a second wavelength onto the product with codes. The control section is configured to control the first and second light irradiating sections such that only one of the first and second light irradiating sections irradiates light. The light capturing section is configured to receive the light with a second wavelength. The light capturing section captures the light with a second wavelength, which is generated by the codes, when the light with a first wavelength is irradiated onto the product, in case that the codes generate light with a second wavelength when the light with a first wavelength is irradiated onto the codes. The light capturing section captures the light with a second wavelength, which is reflected by regions except the codes, when the light with a second wavelength is irradiated onto the product, in case that the codes absorb light with a second wavelength when the light with a second wavelength is irradiated onto the codes.

The control section controls the second light irradiating section to irradiate the light with a second wavelength when the reader operates, and the control section judges if brightness of image of the product with codes, which is captured by the light capturing section, is equal to or higher than a predetermined brightness.

The control section interprets codes, based on points of which brightness is relatively lower, when the control section judges that the brightness of the image is equal to or higher than the predetermined brightness.

The control section controls the second light irradiating section to stop operation and controls the first light irradiating section to irradiate the light with the first wavelength, when the control section judges that the brightness of the image is lower than the predetermined brightness.

The control section interprets codes, based on points of which brightness is relatively higher in the image captured by the light capturing section from the product with codes.

The light with a first wavelength is for example ultraviolet light, and the light with a second wavelength is for example infrared light.

A film with codes, according to an exemplary embodiment of the present invention, comprises a film layer and an information layer on the film layer. The information layer has codes formed by a predetermined fluorescent material. The predetermined fluorescent material generates light with a second wavelength, which is capable of being captured by a reader, when an irradiating section of the reader irradiates light with a first wavelength.

The film is attached to a surface of a display device included in an electronic device, and the film layer is transparent.

The light with a first wavelength is ultraviolet light or infrared light, and the light with a second wavelength is visible light.

The second wavelength is out of wavelength range used in the display device.

A film with codes, according to another exemplary embodiment of the present invention comprises a film layer, a first fluorescent material on the film layer, the first fluorescent material generating light with a second wavelength when a light irradiating section of a reader irradiates light with a first wavelength, and a second fluorescent material on the first fluorescent material. The second fluorescent material absorbs the light with a second wavelength and displaying codes.

The light with a first wavelength is ultraviolet light, and the light with a second wavelength is infrared light.

The film with codes may further comprise a protection layer over the film layer, the protection layer protecting codes displayed by the second fluorescent material.

A film with codes according to still another exemplary embodiment comprises a film layer including a first fluorescent material generating light with a second wavelength, when a light irradiating section of a reader irradiates light with a first wavelength and a second fluorescent material on the first fluorescent material. The second fluorescent material absorbs the light with a second wavelength and displaying codes.

The light with a first wavelength is ultraviolet light and the light with a second wavelength is infrared light.

The film with codes may further comprise a protection layer over the film layer, the protection layer protecting codes displayed by the second fluorescent material.

An electronic device according to an exemplary embodiment of the present invention comprises a display device, and the electronic device has a film with codes attached on the display device. The film with codes comprises a film layer that is transparent and an information layer formed on the film layer, the information layer displaying codes with predetermined fluorescent material. The predetermined fluorescent material generates light with a second wavelength, which is capable of being captured by a light capturing section of a reader, when a light irradiating section of the reader irradiates light with a first wavelength.

For example, the light with a first wavelength is ultraviolet light and the light with a second wavelength is infrared light.

For example, the second wavelength is out of wavelength range used in the display device.

An electronic device according to another exemplary embodiment of the present invention comprises a display device, and the electronic device has a film attached on the display device. The film comprises a film layer including a first fluorescent material generating light with a second wavelength when a light irradiating section of a reader irradiates light with a first wavelength and a second fluorescent material on the film layer to display codes, the second fluorescent material absorbing the light with a second wavelength.

For example, the light with a first wavelength is ultraviolet light and the light with a second wavelength is infrared light.

An electronic device according to still another exemplary embodiment of the present invention comprises a display device, and the electronic device has a film attached on the display device. The film comprises a film layer, a first fluorescent material, and a second fluorescent material. The first fluorescent material is applied to the film layer, the first fluorescent material generating light with a second wavelength when a light irradiating section of a reader irradiates light with a first wavelength. The second fluorescent material is on the first fluorescent material, and the second fluorescent material absorbs the light with a second wavelength and displaying codes.

For example, the light with a first wavelength is ultraviolet light and the light with a second wavelength is infrared light.

### [Advantageous Effects]

According to the present invention, the film can be read even when codes are formed on a surface of a transparent material that is attachable to a display section of an electronic device.

Further, according to the present invention, codes formed on a surface of a transparent material that is attached to a display section of an electronic device can be read in linkage with a displayed image.

Additionally, according to the present invention, the light irradiated by a light irradiating section cannot be directly captured in case of reading target is not a diffused reflection surface such as a paper, so that it is not required that the light irradiating section and the light capturing section of the reader are optically separated.

### [Description of Drawings]

FIG. 1 is a view explaining reading operation of a reader according to an exemplary embodiment of the present invention.
FIG. 2 is a view showing an image captured by a light capturing section of a reader.
FIG. 3 is a view showing a structure of film with codes in FIG. 1.
FIG. 4 is a view showing a structure of a reader according to another exemplary embodiment of the present invention.
FIG. 5 is a view showing a captured image of printed surface in FIG. 4.
FIG. 6 is an operation block diagram of a reader according to another exemplary embodiment of the present invention in FIG. 4.
FIG. 7 is a flow chart showing an operation of a reader according to another exemplary embodiment of the present invention in FIG. 4.
FIG. 8 is a view showing a structure of a film with codes according to still another exemplary embodiment of the present invention.
FIG. 9 is a view showing an image of a perforation film in FIG. 8.
FIG. 10 is a view showing a film with codes according to an exemplary embodiment of the present invention.
FIG. 11 is a view showing a reading operation of a reader reading a film with codes according to an exemplary embodiment of the present invention.

### [Mode for Invention]

Hereinafter, exemplary embodiments of the present invention will be described with reference to the accompanying drawings. In the drawings, the same reference numbers are used for the same elements. And, a function and an element of prior art which are unnecessarily point cloudy will be omitted.

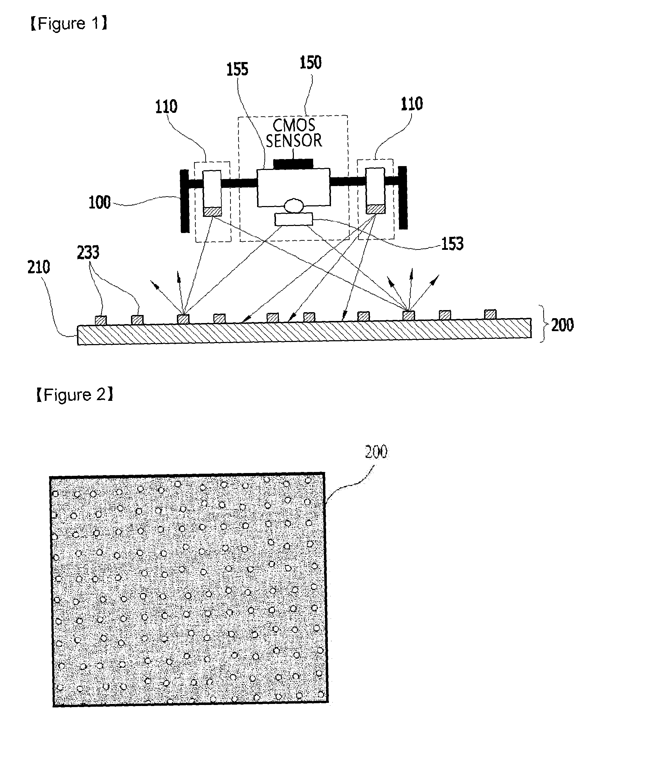

FIG. 1 is a view explaining reading operation of a reader according to an exemplary embodiment of the present invention. Referring to FIG. 1, a reader 100 according to an exemplary embodiment of the present invention includes a light irradiating section 110 and a light capturing section 150, and the reader 100 read out code information from a film with codes 200.

The film with codes 200 includes a film layer 210 on which codes are formed by a predetermined fluorescent material. The film layer 210 is transparent. When light with a first wavelength is irradiated by the light irradiating section 110 of the reader 100 onto the predetermined material, the predetermined material generates light with a second wavelength, which can be captured by the light capturing section 150.

On the other hand, the light with a first wavelength may be ultraviolet light, and the light with a second wavelength may be infrared light. In detail, when the light irradiating section 110 irradiates ultraviolet light with a first wavelength onto the film with codes 200, the fluorescent material on a predetermined position to generate codes generates the infrared light with a second wavelength.

That is, the fluorescent material is fluorescent dye generating infrared light through ultraviolet light. For example, sodium chloride compounds or hydrate calcium sulfate compounds may be used as the fluorescent material.

Alternatively, the light with a first wavelength may be infrared light or ultraviolet light, and the light with a second wavelength may be visible light.

For this, the fluorescent material used for forming codes is fluorescent material generating visible light by receiving ultraviolet light or infrared light. For example, quantum dot material with core of europium oxynitride, cadmium selenide (CdSe), cadmium tellurium (CdTe), or cadmium sulfide (CdS), or indium phosphide quantum dot material may be used.

When the light irradiating section 110 irradiates light with a first wavelength onto the film with codes 200, the fluorescent material on the predetermined position to generate code information on the film generates light with a second wavelength.

On the other hand, the light capturing section 150 of the reader 100 may only capture the light with a second wavelength. For this, the light capturing section 150 has preferably a band pass filter 153 allowing only light with a second wavelength to pass therethrough. The band pass filter 153 is disposed at front side of an image sensor 155.

The light capturing section 150 may include filters such a low pass filter, a high pass filter, a band pass filter, etc. as required to minimize error in code recognition of the reader 100 and noise that may be induced by a light source of the display device.

That is, only the light with a second wavelength generated by the fluorescent material can pass through the band pass filter 153 of the light capturing section 150, so that the image sensor 155 can get image in FIG. 2.

That is, when the image that is generated by the light with a second wavelength when the light with a first wavelength is irradiated onto the fluorescent material 233, is captured, a region of the fluorescent material 233 is displayed brightly and other region is displayed darkly, so that pattern information of dot code, bar code or line segment code that are formed by fluorescent material 233 can be obtained.

In embodying the present invention, it is preferable that the film layer 210 in FIG. 1 is made of material that absorbs the light with a second wavelength and is irresponsive to the light with a first wavelength, since regions where the fluorescent material is not formed is darkly displayed.

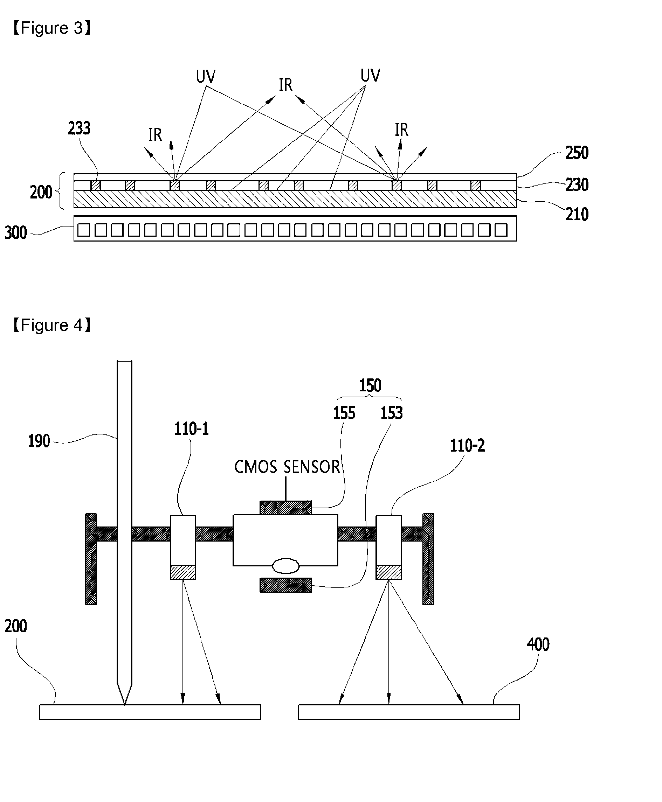

FIG. 3 is a view showing a structure of film with codes in FIG. 1. Referring to FIG. 3, the film with codes 200 in FIG. 1 includes a film layer 210, an information layer 230 and a protection layer 250.

The information layer 230 is a layer with code information, and formed on the film layer 210. In detail, the code information is formed by the predetermined fluorescent material that generates the light with a second wavelength when the light with a first wavelength is irradiated by the light irradiating section 110 of the reader 100.

The fluorescent material forming the information layer 230 is protected by the protection layer 250 formed on the information layer 230. For example, in embodying the present invention, the protection layer 250 may be formed by PET material.

The film layer 210 is formed by a material that absorbs the light with a second wavelength, which is captured by the light capturing section 150. According to an embodiment of the present invention, the film with codes 200 is formed by PET film that is transparent in order for that the film with codes 200 can be applied to the display device 300.

On the other hand, when the film with codes 200 is applied to the display device 300, it is preferable that the light captured by the light capturing section 150 of the reader 100 has wavelength range out of visible light in order to prevent the reader 100 from being malfunctioning due to the light from the display device 300.

Alternatively, when the light with a second wavelength has a wavelength range of visible light, it is preferable that the light capturing section 150 of the reader 100 captures only the visible light generated by the fluorescent material but not the visible light generated by the display device 300 in order to prevent the reader 100 from being malfunctioning due to the visible light from the display device 300.

In order for that the visible light generated by the fluorescent material has a wavelength range out of the visible light generated by the display device.

In general, a display device emits visible light of which range is lower than 700nm. Further a display device does not emit 400nm wavelength blue light, 490nm wavelength light between blue color and green color, and 590n, 590nm wavelength light between red color and green light.

Therefore, in embodying the present invention, it is preferable that the visible light generated by the fluorescent material has wavelength of greater than 700nm, 400nm of blue color, 490nm between blue and green, or 590nm between red color and green color. In order for that, halo silicate-based phosphor, europium oxynitride based phosphor, gallium oxide based phosphor, vanadate based phosphor may be applied to the fluorescent material. Further, quantum dot material emitting light with the above ranged wavelength may be applied to the fluorescent material.

Further, it is preferable to use fluorescent dye of the information layer 230, which has high transmittance regarding the visible light emitted by the display device 300 in order to reduce distortion of image displayed the display device 300. Additionally, it is preferable to reduce the size of dots in the code pattern, which is formed by fluorescent material to lower density of fluorescent material.

FIG. 4 is a view showing a structure of a reader 100 according to another exemplary embodiment of the present invention. The reader 100 in FIG. 4 includes a first light irradiating section 110-1 irradiating light with a first wavelength, and a second light irradiating section 110-2 irradiating light with a second wavelength in order to selectively irradiate light.

In embodying the present invention, the light with a first wavelength is preferably ultraviolet light and the light with a second wavelength is preferably infrared light. In FIG. 4, the first light irradiating section 110-1 irradiating ultraviolet light enables the reader 100 to read out the film with codes 200 in FIG. 1 by irradiating ultraviolet light onto the film, and the second light irradiating section 110-2 irradiating infrared light enables the reader 100 to read out general printed surface such as a paper on which dot code is formed by using dye which absorbs infrared light.

The operation of the first light irradiating section 110-1 is substantially same as that in FIG. 1 and FIG. 2. Therefore, only the operation of the second light irradiating section 110-2 will be explained.

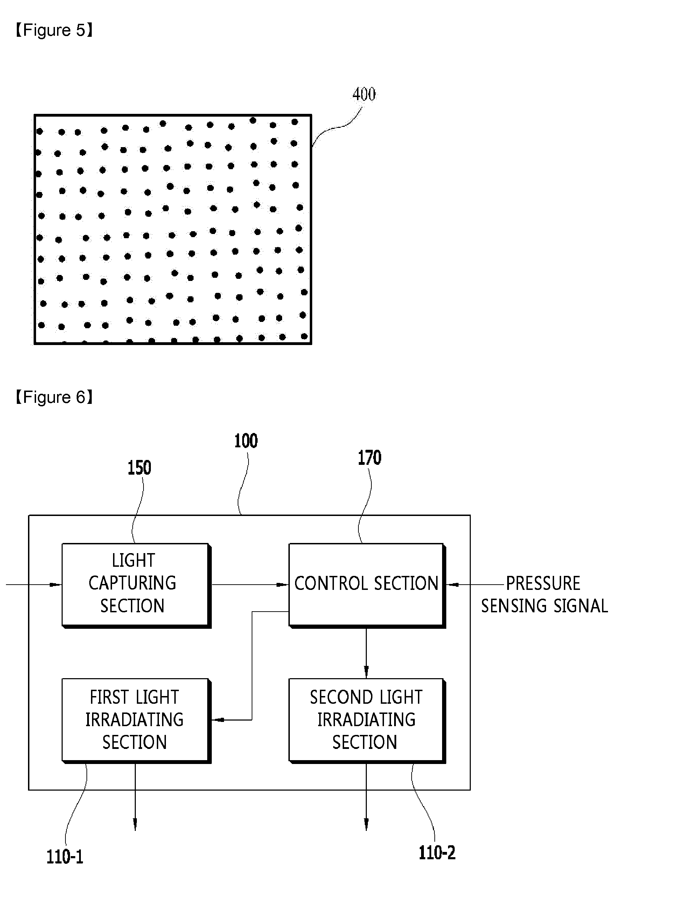

When the second light irradiating section 110-2 irradiates infrared light onto a printed surface 400 on which dot code is formed by using dye that absorbs infrared light, the infrared light is absorbed at regions on which the dot code is formed and reflected at other regions, so that the region on which the dot code is formed is darkly displayed in an image captured by the light capturing section 150 that captures only infrared light as shown in FIG. 5.

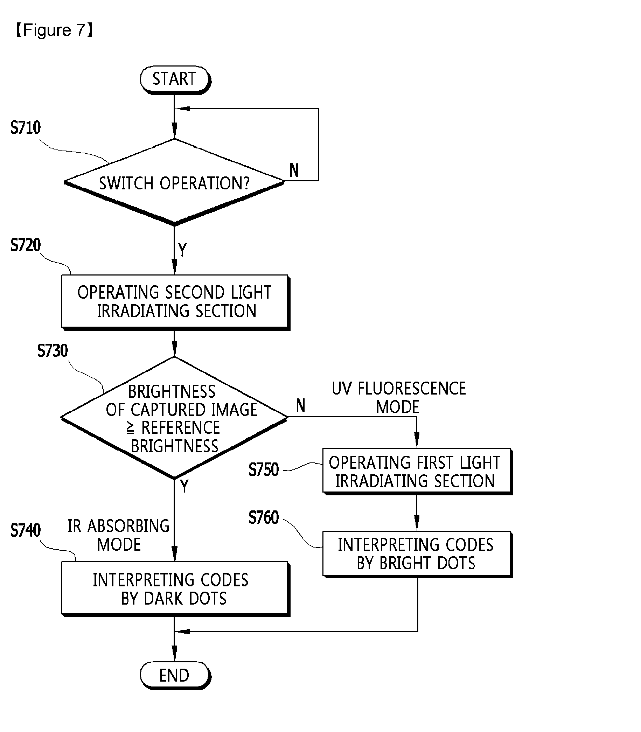

FIG. 6 is an operation block diagram of a reader 100 according to another exemplary embodiment of the present invention in FIG. 4, and FIG. 7 is a flow chart showing an operation of a reader 100 according to another exemplary embodiment of the present invention in FIG. 4.

Referring to FIG. 4 through FIG. 7 to explain the operation of the reader 100 according to another exemplary embodiment of the present invention, the control section 170 of the reader 100 judges operation of a switch 190 (S710), and controls the second light irradiating section 110-2 to irradiate infrared light when the operation or the pressure of the switch 190 is detected (S270).

If the a reading target is the film with codes 200 with fluorescent material, the image captured from the reading target by the light capturing section 150 is relatively dark since the film layer of the film with codes 200 absorbs infrared light. On the other hand, if a reading target is the printed surface 400 on which codes are formed by dye that absorbs infrared light, the image captured from the printed surface 400 by the light capturing section 150 is relatively bright since only regions on which codes are formed are displayed dark and other regions are display bright.

Therefore, the control section 170 judges if the brightness of the image obtained by the light capturing section 150 is equal to or higher than a predetermined reference brightness (S370). When the brightness of the image is equal to or higher than the predetermined reference brightness, the control section 170 determines that the image is captured from the printed surface 400 on which dot code is formed by dye that absorbs infrared light to interpret codes based on dark point in FIG. 5.

When the brightness of the image obtained by the light capturing section 150 is lower than the predetermined reference brightness, the control section 170 determines that the reading target is the film with codes 200 having codes formed by fluorescent material, and controls the second light irradiating section 110-2 to stop operating and the first light irradiating section 110-1 to irradiate ultraviolet light onto the reading target. In this case, the image captured by the light capturing section 150 is the image in which codes are displayed brightly due to the fluorescent material as shown in FIG. 2, so that the control section 170 interprets the codes based on bright point.

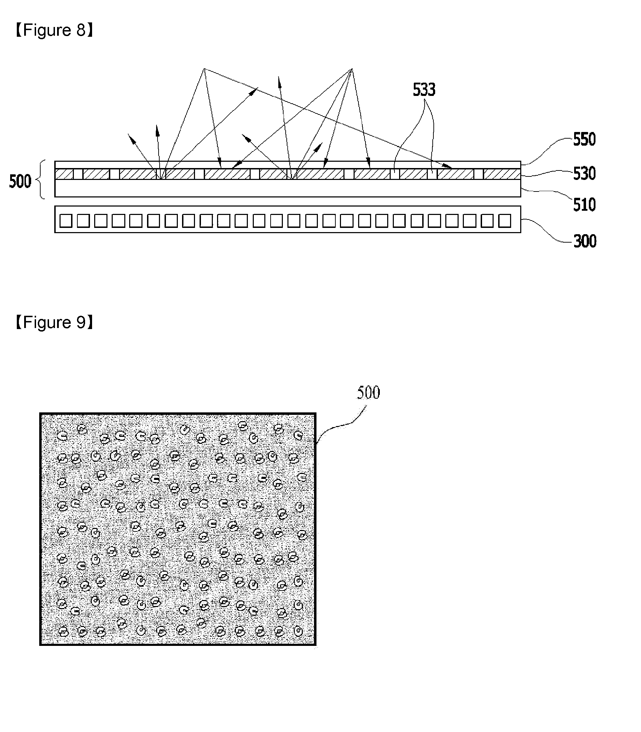

FIG. 8 is a view showing a structure of a film with codes according to still another exemplary embodiment of the present invention. Referring to FIG. 8, the film with codes according to still another exemplary embodiment of the present invention includes a reflective layer 510, an information layer 530 and a protection layer 550.

The reflective layer 510 includes a material that reflects light irradiated by the light irradiating section 110 of the reader 100. The information layer 530 is disposed on the reflective layer 510, and absorbs the light irradiated by the light irradiating section 110 of the reader 100.

In the information layer 530, a plurality of perforation points is formed in order to form dot codes, and the protection layer 550 is formed on the information layer 530 with the perforation points 533 to protect the perforation points 533.

That is, the film with codes is referred to as a perforation film 500, since the film with codes displays codes through perforation points 533.

In the present embodiment, the perforation point 533 of the perforation film 500 may be formed through a laser processing, a press processing performed by protrusion, a custum mold process through a plurality of awl of code pattern.

The perforation film 500 according to the present invention has a multilayer structure as shown in FIG. 8. Therefore, when the light irradiating section 110 of the reader 100 irradiates infrared light onto the information layer 530, a portion of the infrared light arriving at regions with no perforation points is absorbed, and other portion of the infrared light arriving at perforation point 533 is not absorbed but reflected by the reflective layer 510 exposed through the perforation point 533.

As described above, the other portion of the infrared light reflected at the perforation point 533 is captured by the light capturing section 150 of the reader 100 so that the reader 100 obtains the image in FIG. 9, and the reader 100 interprets the codes pattern information based on bright point.

On the other hand, the other portion of infrared light passing through the perforation point 533 is refracted to induce diffused reflection. Therefore, the direct capturing the light irradiated by the light irradiating section 110 through the light capturing section 150 and light spot included by mirror phenomenon is prevented.

Further, in embodying the present invention, the protection layer 550 and the reflective layer 510 may be formed by a transparent material so that the perforation film 500 in FIG. 8 may be applied to a display device 300.

When the perforation film 500 according to the present invention is applied to the display device 300 as shown in FIG. 8, the light irradiated by the light irradiating section 110, reflected by the reflective layer 510 and captured by the light capturing section 150 of the reader 100 has preferably a wavelength range out of visible light wavelength in order to prevent malfunctioning of the reader, which is induced by light emitted by the display device 300.

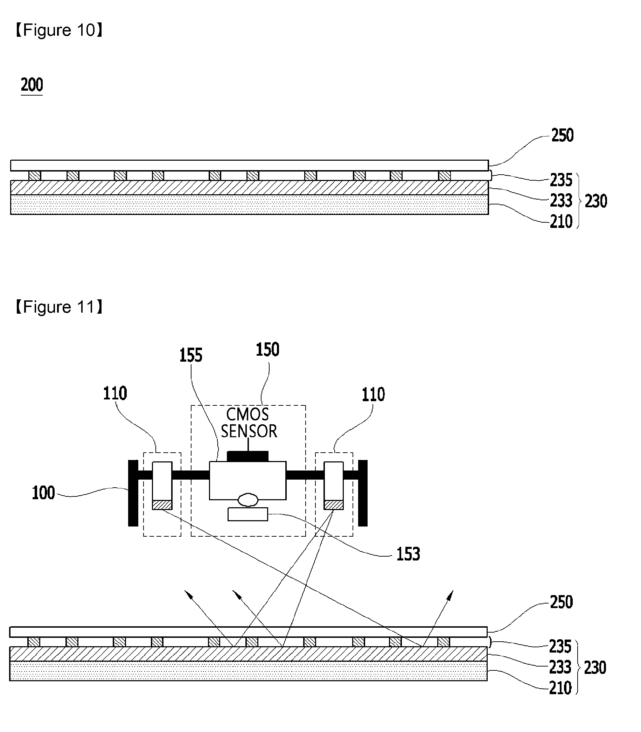

FIG. 10 is a view showing a film with codes according to an exemplary embodiment of the present invention. Referring to FIG. 10, the film with codes 200 according to an exemplary embodiment of the present invention includes a film layer 210, an information layer 230 and a protection layer 250.

The film layer 210 may be preferably transparent PET film in order for that the film with codes 200 may be applied to display device.

The information layer 230 is a layer with codes formed by fluorescent material. The information layer 230 includes a first information layer 233 and a second information layer 235.

In detail, a first fluorescent material in the first information layer 233 is a fluorescent material generating light with a second wavelength when receiving light with a first wavelength, and the first fluorescent material is coated on the film layer 210.

A second fluorescent material in the second information layer 235 is a material absorbing light with a second wavelength. The second fluorescent material is used for generating codes formed on the first information layer 233 which is on the film layer 210 as shown in FIG. 10.

In embodying the present invention, the codes generated by the second fluorescent material may be one of a various type codes such as a dot code, a bar code or line segment code, etc.

The fluorescent material forming the information layer 230 in FIG. 10 is protected by the protection layer 250, which is transparent and formed on the information layer 230. In embodying the present invention, the protection layer 250 includes preferably PET material.

FIG. 11 is a view showing a reading operation of a reader reading a film with codes according to an exemplary embodiment of the present invention.

Referring to FIG. 11, the reader 100 according to an exemplary embodiment of the present invention includes a light irradiating section 110 and a light capturing section 150, and the reader 100 readouts code information on the film with codes 200.

The light irradiating section 110 of the reader 100 irradiates light with a first wavelength, and the first fluorescent material forming the first information layer 233 generates light with a second wavelength, which is capable of being captured by the light capturing section 150 when the light with a first wavelength is irradiated.

According to an exemplary embodiment, the light with a first wavelength may be ultraviolet light, and the light with a second wavelength may be infrared light. According to another exemplary embodiment, the light with a first wavelength may be visible light, and the light with a second wavelength may be infrared light. According to still another exemplary embodiment of the present invention, the light with a first wavelength may be infrared light with a first wavelength and the light with a second wavelength may be infrared light with a second wavelength.

In detail, when the light irradiating section 110 of the reader 100 irradiates ultraviolet light with a first wavelength onto the film with codes 200, the first fluorescent material coating the film layer 210 generates infrared light.

When the infrared light generate by the first fluorescent material is captured by the light capturing section 150, the second fluorescent material on the film layer 210 absorbs the infrared light generated by the first fluorescent material, so that the image captured by the light capturing section 150 has dark regions expressing codes.

In embodying the present invention, sodium chloride compounds or hydrated calcium sulfate compounds may be used for the first fluorescent material that receives ultraviolet light to generate infrared light.

The light capturing section 150 of the reader 100 captures only the infrared light with a second wavelength. In order for that, the light capturing section 150 includes a band pass filter 153 allowing only the infrared light with a second wavelength to pass therethrough. The band pass filter 153 is disposed at front side of an image sensor 155.

That is, the band pass filter 153 allows only a portion of the light with a second wavelength, which is generated by the first fluorescent material except other portion absorbed by the second fluorescent material, to transmit therethrough, so that the image sensor 155 obtains the image in FIG. 3.

When the film with codes 200 is applied to a display device, the light captured by the light capturing section 150 has wavelength preferably out of a wavelength range of visible light in order to prevent malfunctioning of the reader 100 due to light emitted b the display device.

Further, it is preferable to use fluorescent dye of the information layer 230, which has high transmittance regarding the visible light emitted by the display device in order to reduce distortion of image displayed the display device. Additionally, it is preferable to reduce the size of dots in the code pattern, which is formed by second fluorescent material to lower density of fluorescent material.

On the other hand, when embodying the present invention, the first fluorescent material may be included in the film layer 210 as one body in producing the film layer 210 unlike the film layer 210 with the first information layer 233 being formed thereon and including the first fluorescent material.

That is, when a manufacturer manufactures the film layer 210, the manufacturer may mix the first fluorescent material with a raw material of the film layer 210 for injection molding, so that the film layer 210 may have function of the first information layer 233.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A reader comprising:
a light irradiating section configured to irradiate a light with a first wavelength onto a film with codes formed by a fluorescent material; and
a light capturing section configured to capture only a light with a second wavelength, which is generated by the fluorescent material, when the light with a first wavelength is irradiated onto the codes.

2. The reader of claim 1, wherein the film is attached onto a surface of a display device included in an electronic device, and the film is transparent.

3. The reader of claim 2, wherein the light with a first wavelength is ultraviolet light or infrared light, and the light with a second wavelength is visible light.

4. The reader of claim 3, wherein the second wavelength is out of wavelength range used in the display device.

5. The reader of claim 4, wherein the light capturing section includes a filter allowing only a light with the second wavelength to pass therethrough.

6. A reader comprising:
a first light irradiating section configured to irradiate a light with a first wavelength onto a product with codes;
a second light irradiating section configured to irradiate a light with a second wavelength onto the product with codes;
a control section configured to control the first and second light irradiating sections such that only one of the first and second light irradiating sections irradiates light; and
a light capturing section configured to receive the light with a second wavelength,
wherein the light capturing section captures the light with a second wavelength, which is generated by the codes, when the light with a first wavelength is irradiated onto the product, in case that the codes generate light with a second wavelength when the light with a first wavelength is irradiated onto the codes, and
wherein the light capturing section captures the light with a second wavelength, which is reflected by regions except the codes, when the light with a second wavelength is irradiated onto the product, in case that the codes absorb light with a second wavelength when the light with a second wavelength is irradiated onto the codes.

7. The reader of claim 6, wherein the control section controls the second light irradiating section to irradiate the light with a second wavelength when the reader operates, and
the control section judges if brightness of image of the product with codes, which is captured by the light capturing section, is equal to or higher than a predetermined brightness.

8. The reader of claim 7, wherein the control section interprets codes, based on points of which brightness is relatively lower, when the control section judges that the brightness of the image is equal to or higher than the predetermined brightness.

9. The reader of claim 7, wherein the control section controls the second light irradiating section to stop operation and controls the first light irradiating section to irradiate the light with the first wavelength, when the control section judges that the brightness of the image is lower than the predetermined brightness.

10. The reader of claim 7, wherein the control section interprets codes, based on points of which brightness is relatively higher in the image captured by the light capturing section from the product with codes.

11. The reader of claim 6, wherein the light with a first wavelength is ultraviolet light, and the light with a second wavelength is infrared light.

12. A film with codes, comprising:
a film layer; and
an information layer on the film layer, the information layer having codes formed by a predetermined fluorescent material,
wherein the predetermined fluorescent material generates light with a second wavelength, which is capable of being captured by a reader, when an irradiating section of the reader irradiates light with a first wavelength.

13. The film with codes of claim 12, wherein the film is attached to a surface of a display device included in an electronic device, and the film layer is transparent.

14. The film with codes of claim 13, wherein the light with a first wavelength is ultraviolet light or infrared light, and the light with a second wavelength is visible light.

15. The film with codes of claim 14, wherein the second wavelength is out of wavelength range used in the display device.

16. A film with codes, comprising:
a film layer;
a first fluorescent material on the film layer, the first fluorescent material generating light with a second wavelength when a light irradiating section of a reader irradiates light with a first wavelength; and
a second fluorescent material on the first fluorescent material, the second fluorescent material absorbing the light with a second wavelength and displaying codes.

17. The film with codes of claim 16, wherein the light with a first wavelength is ultraviolet light, and the light with a second wavelength is infrared light.

18. The film with codes of claim 16, further comprising a protection layer over the film layer, the protection layer protecting codes displayed by the second fluorescent material.

19. A film with codes, comprising:
a film layer including a first fluorescent material generating light with a second
wavelength, when a light irradiating section of a reader irradiates light with a first wavelength; and
a second fluorescent material on the first fluorescent material, the second fluorescent material absorbing the light with a second wavelength and displaying codes.

20. The film with codes of claim 19, wherein the light with a first wavelength is ultraviolet light and the light with a second wavelength is infrared light.

21. The film with codes of claim 19, further comprising a protection layer over the film layer, the protection layer protecting codes displayed by the second fluorescent material.

22. An electronic device comprising a display device, the electronic device having a film with codes attached on the display device,
wherein the film with codes comprises a film layer that is transparent and an information layer formed on the film layer, the information layer displaying codes with predetermined fluorescent material,
wherein the predetermined fluorescent material generates light with a second wavelength, which is capable of being captured by a light capturing section of a reader, when a light irradiating section of the reader irradiates light with a first wavelength.

23. The electronic device of claim 22, wherein the light with a first wavelength is ultraviolet light and the light with a second wavelength is infrared light.

24. The electronic device of claim 23, wherein the second wavelength is out of wavelength range used in the display device.

25. An electronic device comprising a display device, the electronic device having a film attached on the display device,
wherein the film comprises:
a film layer including a first fluorescent material generating light with a second wavelength when a light irradiating section of a reader irradiates light with a first wavelength; and
a second fluorescent material on the film layer to display codes, the second fluorescent material absorbing the light with a second wavelength.

26. The electronic device of claim 25, wherein the light with a first wavelength is ultraviolet light and the light with a second wavelength is infrared light.

27. An electronic device comprising a display device, the electronic device having a film attached on the display device,
wherein the film comprises:
a film layer;
a first fluorescent material applied to the film layer, the first fluorescent material generating light with a second wavelength when a light irradiating section of a reader irradiates light with a first wavelength; and
a second fluorescent material on the first fluorescent material, the second fluorescent material absorbing the light with a second wavelength and displaying codes.

28. The electronic device of claim 27, wherein the light with a first wavelength is ultraviolet light and the light with a second wavelength is infrared light.
